**Europäisches Patentamt**

**European Patent Office**

**Office européen des brevets**

(11) Veröffentlichungsnummer: **0 337 303**
**A2**

(12) # EUROPÄISCHE PATENTANMELDUNG

(21) Anmeldenummer: **89106089.9**

(51) Int. Cl.4: **B23Q 5/027**

(22) Anmeldetag: **07.04.89**

(30) Priorität: **15.04.88 DE 3812587**

(43) Veröffentlichungstag der Anmeldung:
**18.10.89 Patentblatt 89/42**

(84) Benannte Vertragsstaaten:
**DE ES FR GB IT**

(71) Anmelder: **Albrecht Bäumer KG**
**Spezialmaschinenfabrik**
**Asdorfer Strasse 96-106**
**D-5905 Freudenberg(DE)**

(72) Erfinder: **Pötzsch, Rolf**
**Am Aspenwald 6**
**D-5905 Freudenberg(DE)**

(74) Vertreter: **Grosse, Dietrich, Dipl.-Ing. et al**
**Patentanwälte**
**HEMMERICH-MÜLLER-GROSSE-POLLMEIER--**
**MEY-VALENTIN Hammerstrasse 2**
**D-5900 Siegen 1(DE)**

(54) Antriebsvorrichtung für ein Sägeblatt oder dergleichen.

(57) Die Erfindung betrifft eine Antriebsvorrichtung für oszillierende Werkzeuge, bei der ein durch einen Exzenterbolzen betriebener Pleuel ein als Übertragungsmittel vorgesehenes gespanntes Band, Seil oder dergleichen in dessen Längsrichtung oszillierend bewegt.

Um bei niedrigen Gestehungskosten sowohl lange Standzeiten zu ermöglichen als auch hohe Leistungen des Werkzeuges zu erreichen, wird der Pleuel 18 in Teilarmlänge an eine Schwinge 8 angelenkt, mit deren freiem Ende das sich quer zu ihr erstreckende Übertragungsmittel, bspw. ein Seil 10, verbunden ist.

Fig.1

## Antriebsvorrichtung für ein Sägeblatt oder dergleichen

Die Erfindung betrifft eine Antriebsvorrichtung für oszillierende Werkzeuge, bspw. ein Sägeblatt in einer Schaumstoff-Konturen-Schneidemaschine, bei der mittels eines kraftbetriebenen Exzenterbolzens über einen Pleuel eine mit dem Werkzeug in Verbindung stehende Übertragungsvorrichtung, bspw. ein umgelenktes, mit seinen Enden mit den beiden Enden des Werkzeuges verbundenes, vorgespanntes Seil, oszillierend angetrieben wird.

Bekannt ist eine solche Schaumstoff-Konturen-Schneidemaschine aus der DE-PS 33 12 133. Das dort als Werkzeug verwendete, sägeartig ausgebildete und oszillierend betriebene Bandschneidemesser ist drehbar beidendig in Einspanneinrichtungen gehalten und wird durch ein über Rollen unter Vorspannung polygonartig geführtes Seil gespannt erhalten, das gleichzeitig die oszillierende Antriebsbewegung übermittelt. Bewirkt wird diese Bewegung über einen direkt im Wellenstumpf eines Elektromotors angeordneten Exzenterbolzen, der vom Lager eines Pleuels umgriffen ist, das seinerseits entlang einer Führung eine Kulisse definiert verschiebt, die mit dem vorspannenden und antreibenden Seil verbunden ist. Durch diese Kulissenübertragung werden zwar seitliche Auslenkungen des sich zentrisch zur Führung erstreckenden Seiles strikt vermieden, der zu treibende mechanische Aufwand jedoch erweist sich als unerwünscht hoch, und auch der Verschleiß, dem die bekannte Antriebseinrichtung unterliegt, hat sich als nachteilig erwiesen. Als unvorteilhaft hat sich auch gezeigt, daß die Leistung einer derartigen Antriebsvorrichtung beschränkt ist.So lassen sich zwar Elektromotoren mit einer Drehzahl von 1250 U/min verwenden, der durch die Exzentrizität einstellbare Hub jedoch läßt sich in der Praxis nicht über 20 mm steigern.

Die Erfindung geht daher von der Aufgabe aus, eine gleichartigen Antriebsaufgaben genügende Antriebseinrichtung aufzufinden, die sich durch geringeren Aufwand sowie verringerten Verschleiß ebenso auszeichnet wie durch höhere Schneidleistungen, die sich durch die Anwendung höherer Drehzahlen, insbesondere aber höherer Arbeitshube des Werkzeuges ergeben.

Gelöst wird diese Aufgabe mit den kennzeichnenden Merkmalen des Patentanspruches 1. Bei der Verwendung einer einfachen, pendelnden Schwinge wird mit handelsüblichen Lagern eine leichtgängige, definierte Bewegung ohne wesentliche Schleißerscheinungen erreicht. Hierbei läßt sich nicht nur ein Exzenterbolzen höherer Exzentrizität einsetzen, auch die Hebelarmlängen der Schwinge gestatten, den vom Exzenter bewirkten Hub durch Hebelwirkung nochmals zu vergrößern.

Es hat sich hierbei herausgestellt, daß, obwohl der Ankopplungspunkt des treibenden Seiles oder Bandes nunmehr entlang eines Umfangsbereiches des Schwenkweges der Schwinge geführt wird, Schwierigkeiten nicht eintreten, insbesondere wenn ein Knicken des Bandes bzw. Seiles vermieden wird, so daß eine Ankopplung der Schwinge an das Band, bspw. über einen zusätzlichen Aufwand und zusätzliche Massen bedingenden zweiten Pleuel, verzichtbar wird.

Zweckmäßige und vorteilhafte Weiterbildungen des Gegenstandes der Erfindung sind in den Unteransprüchen gekennzeichnet.

Im einzelnen sind die Merkmale der Erfindung anhand der Beschreibung eines Ausführungsbeispieles in Verbindung mit dieses darstellenden Zeichnungen erläutert. Es zeigen hierbei:

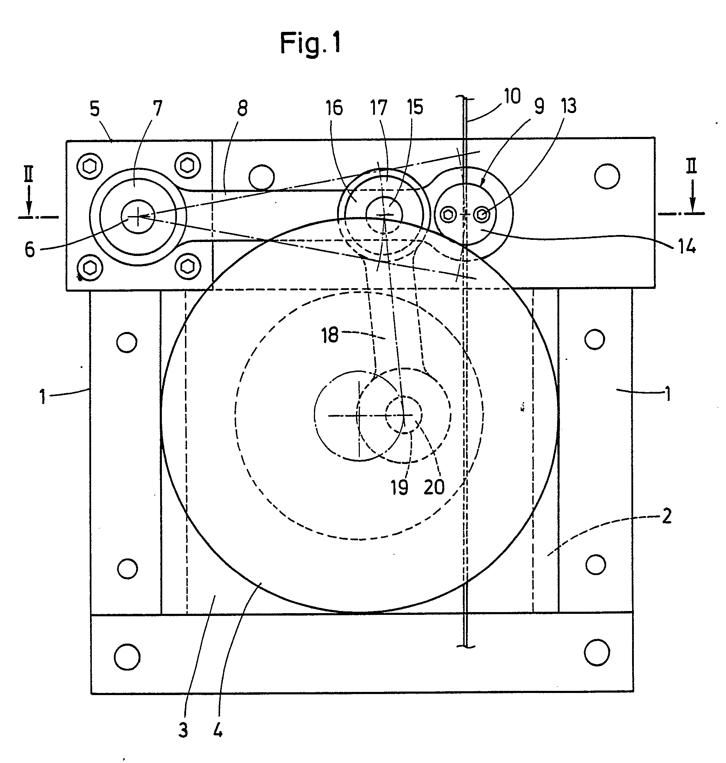

Figur 1 eine Aufsicht auf die Antriebsvorrichtung von der Motorseite her, und

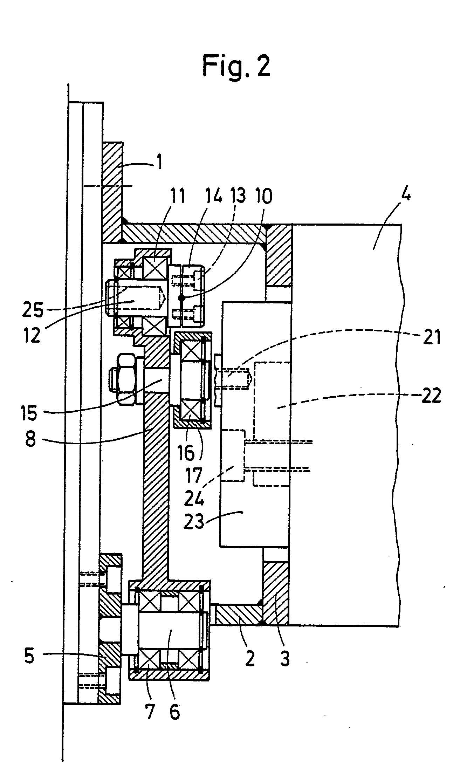

Figur 2 Schnitte durch die Antriebsvorrichtung der Fig. 1 entlang von in dieser vorgegebenen Ebenen.

In den Figuren sind Grundplatten 1 gezeigt, an die sich über Distanzbleche 2 ein Motorträger 3 anschließt, so daß ein im wesentlichen U-förmiges Gehäuse ergibt, auf dessen Motorträger 3 ein Elektromotor 4 angeflanscht ist. Mit einer der Grundplatten 1 verbunden ist eine Trageplatte 5 mit eingesetzten Lagerbolzen 6, auf dem vermittels zweier Wälzlager 7 das eine Ende einer Schwinge 8 gelagert ist. Das freie Ende dieser Schwinge ist mit einer Klemmvorrichtung 9 versehen, an die ein die oszillierende Antriebsbewegungn sowie die Vorspannung des Werkzeuges vermittelndes Seil 10 angekoppelt ist: In einem am freien Ende der Schwinge 8 vorgesehenen Auge sind axial hintereinander zwei Wälzlager 11 angeordnet, in denen dreh- bzw. schwenkbar ein Bolzen 12 gelagert ist, der zur Verringerung seiner Masse mit einer vom freien Ende her eingreifenden Sackbohrung 25 ausgestattet ist. Vermittels von Spannschrauben 13 ist gegen die Kopffläche des Bolzens 12 ein Klemmstück 14 verspannt. Die einander gegenüberstehenden Kopfflächen des Bolzens 12 und des Klemmstückes 14 enthalten entlang ihres Durchmessers verlaufende Nute, um die Lage des zwischen ihnen einzuklemmenden Seiles 10 zu definieren.

In einer Teilarmlänge der Schwinge 8 ist mit dieser ein Koppelbolzen 15 verbunden, der mit zwei Wälzlagern 16 ausgestattet ist, die in das Auge 17 eines Pleuels 18 eingreifen. Die Lagerbohrung 19 des Pleuels ist mit einem Wälzlager 20 ausgestattet, welches einen Exzenterbolzen 21 umfaßt, der mit vorgegebener Exzentrizität in einer Kappe 23 angeordnet ist, welche den Wellenstumpf 22 des Elektromotors 4 übergreift und mit diesem durch eine in eine exzentrische Sack-Gewindebohrung eingreifende Spannschraube 24 verbunden ist. Der Exzenterbolzen 21 ist hierbei gegenüber der Bohrung für die Spannschraube 24 um 180° versetzt, um durch möglichst große Entfernung zwischen beiden gegenseitige Störungen auszuschließen. So kann die Exzentrizität des Exzenterbolzens 21 frei und unabhängig von der der Spannschraube 24 gewählt werden.

In der Praxis ergibt sich hierbei folgende Wirkungsweise: Beim Betriebe des Elektromotors 4 wird mit dessen Drehgeschwindigkeit und mit der Exzentrizität des Exzenterbolzens 21 das Pleuel 18 angetrieben, das seinerseits die angekoppelte Schwinge 8 periodisch schnell innerhalb des strichpunktiert angedeuteten Winkelbereiches verschwenkt. Der durch Hebelwirkung noch vergrößerte Hub tritt im Bereiche des am freien Ende der Schwinge 8 vorgesehenen Auges auf und wird über die Klemmvorrichtung 9 dem die Werkzeuge treibenden Seil 10, Band oder dergleichen mitgeteilt. Da diese Klemmvorrichtung leichtgängig im Auge der Schwinge 8 gelagert ist, stellt sie sich durch die Spannung des Seiles 10 stets so ein, daß dieses keine Knickungen erfährt, auch wenn, entsprechend der Umfangslinie entlang des Schwenkwinkels, geringe seitliche Auslenkungen des Seiles aus seiner gespannten Lage bzw. der durch die Umlenkrollen gegebenen Achse sich ergeben. Es hat sich jedoch gezeigt, daß diese geringen Auslenkungen unerheblich sind und den Betrieb nicht beeinträchtigen.

Als vorteilhaft hat es sich erwiesen, daß nicht nur Elektromotoren mit gegenüber den bisher verwendeten erhöhter Umdrehungsgeschwindigkeit einsetzbar sind, es ist insbesondere auch möglich, höhere Exzentrizitäten der Exzenterbolzen praktisch zu verwirklichen und damit, bspw. gegenüber dem bisher Erreichten, um den Faktor 2,5 gesteigerte Arbeitshube und damit entsprechend erhöhte Werkzeuggeschwindigkeiten und Schnittleistungen zu erhalten. Der Aufbau der Antriebsvorrichtung gestaltet sich relativ einfach und wenig aufwendig. Als vorteilhaft erweisen sich die geringen jeweils zu beschleunigenden Massen, die, wie am Beispiel des Bolzens 12 gezeigt, durch Aussparungen sich noch weiter reduzieren lassen. Als vorteilhaft zeigt es sich auch, daß die Exzentrizität in relativ weiten Grezen unabhängig wählbar ist. Als wesentlicher Vorteil stellt es sich heraus, daß die bewegten Teile jeweils in Wälzlagern gehalten sind, die einen nur geringen Aufwand bedingen und sowohl Leichtgängikeit als auch außerordentlich lange Standzeiten sichern. Der jeweils gewünschte Hub läßt sich außer durch die Exzentrizität des treibenden Exzenterbolzens 21 auch zusätzlich durch das Verhältnis der wirksamen Armlängen der Schwinge 8 beeinflussen, bspw. also durch eine Verlängerung der Schwinge über den Koppelbolzen 15 hinaus oder aber durch eine Verlegung des Koppelbolzens in Richtung auf den Lagerbolzen hin weiterhin steigern.

## Ansprüche

1. Antriebsvorrichtung für oszillierende Werkzeuge, bspw. ein Sägeblatt in einer Schaumstoff-Konturen-Schneidemaschine, bei der mittels eines kraftbetriebenen Exzenterbolzens über einen Pleuel eine mit dem Werkzeug in Verbindung stehende Übertragungsvorrichtung, bspw. ein umgelenktes, mit seinen Enden mit den beiden Enden des Werkzeuges in Verbindung stehendes vorgespanntes Seil, oszillierend angetrieben wird, **gekennzeichnet durch** eine einendig ortsfest gelagerte Schwinge (8), deren freies Ende mit einer Verbindungsvorrichtung (Klemmvorrichtung 9) für die Übertragungsvorrichtung (Seil 10) versehen ist, und die in einer Teillänge mit einem Koppelbolzen (15) ausgestattet ist, auf dem das Auge (17) des Pleuels (18) gelagert ist.

2. Antriebsvorrichtung nach Anspruch 1, **dadurch gekennzeichnet,** daß die Verbindungsvorrichtung einen in einer am freien Ende der Schwinge (8) vorgesehenen Bohrung gelagerten bolzen (12) aufweist.

3. Antriebsvorrichtung nach Anspruch 2, **dadurch gekennzeichnet,** daß der Bolzen (12) mit einem vermittels von Spannschrauben (13) gegen seine Kopffläche spannbaren Klemmstück (14) versehen ist.

4. Antriebsvorrichtung nach Anspruch 3, **dadurch gekennzeichnet,** daß die Kopffläche des Bolzens (12) und die gegen diese vorgespannte Oberfläche des Klemmstückes (14) entlang eines gemeinsamen Durchmessers verlaufende Nute zum Fixieren eines Seiles (10) aufweisen.

5. Antriebsvorrichtung nach einem der Ansprüche 1 bis 4, **dadurch gekennzeichnet,** daß mindestens der Bolzen (12) eine Sackbohrung (25) aufweist.

6. Antriebsvorrichtung nach Ansprüchen 1 bis 5, **dadurch gekennzeichnet,** daß der Wellenstumpf (22) eines Elektromotors (4) von einer Kappe (23) überfangen ist, die mittels einer exzentrisch in den Wellenstumpf (22) eingreifenden Spannschraube (24) mit diesem verbunden ist, und die um 180° versetzt mit einem in das Pleuellager (Wälzlager 20) eingreifenden Exzenterbolzen (21) versehen ist.

7. Antriebsvorrichtung nach Anspruch 2, **dadurch gekennzeichnet,** daß Lager jeweils durch zwei axial hintereinander liegende Wälzlager (7, 11, 16) gebildet sind.

15. 4. 88
Bu

# Fig. 1

15. 4. 88

# Fig. 2